# EUROPEAN PATENT APPLICATION

(11) **EP 2 942 555 A1**
(43) Date of publication of application: **11.11.2015**
(21) Application number: 15160145.7
(22) Date of filing: 20.03.2015
(51) Int. Cl.: F16L 37/091

(54) **Push-Fit pipe coupling**

(30) Priority: 07.05.2014 GB 201408028
(71) Applicant: Pegler Yorkshire Group Limited, Doncaster South Yorkshire DN4 8DF (GB)
(72) Inventor: Wright, Michael, Leeds, LS10 1RT (GB)
(74) Representative: Wilson Gunn

(57) **Abstract**

Push-fit pipe coupling assemblies 1 comprise a demount tool 10 and a pipe coupling 20. Each demount tool 10 is in the form of a part ring having an internal thread 14 and a pressing portion 15. Each coupling 20 comprises a body 21 having an exterior thread 2 1 a and a demount collar 30. In use, the thread 14 of demount tool 10 engages with the exterior thread 21a. As the demount tool 10 moves, an abutting shoulder 16 of the pressing portion 15 comes into contact with the engaging portion 31 of demount collar 30. This forces an angled contact surface 32 to press on the on the teeth 29 of a grab ring 28, preventing the teeth 29 from engaging with a pipe inserted into the coupling 20, allowing the relative position of pipe 2 and coupling 20 to be adjusted.

## Description

### Technical Field of the Invention

The present invention relates to push-fit pipe couplings and in particular for improvements in relation to demountable push-fit pipe slip couplings.

### Background to the Invention

When connecting together pipes, one common form of coupling is a push-fit pipe coupling. Typically, such a coupling comprises a tubular body adapted to retain internally a sealing ring and a grab ring. The sealing ring typically comprises a resiliently deformable ring adapted to form a close seal with a pipe inserted into the coupling and the grab ring comprises a plurality of teeth angled radially and axially inward so as to allow the insertion of a pipe but resist the removal of said pipe.

Such a coupling facilitates adjustment only in the direction of insertion, which is fine where the coupling is intended for the end of the pipe. In such cases, the coupling may include a pipe stop to limit insertion. In the case of slip couplings which omit a pipe stop to facilitate more flexible use, this may not always be desirable. In particular, slip couplings are often used when installing 'pre-made' systems into buildings and in such circumstances the depth of insertion of the pipe into the coupling may need to be varied to cope with slight variations in the building or pipework dimensions, particularly if a pipe is inserted too far into the coupling on initial use. Accordingly, some such fittings are provided with a demount collar having an engagement portion projecting outside the body of the coupling. A demount tool can be brought to bear on the engagement portion so as to force the demount collar axially into the coupling. When demount tool forces the demount collar into the coupling an angled contact surface of the demount collar presses against the teeth of the grab ring, thereby pushing them away from the inserted pipe, allowing two way adjustment. Whilst such demount collars do provide for some level of adjustment, they are not particularly convenient, since a user has to maintain pressure on the demount tool whilst manipulating the pipe.

It is therefore an object of the present invention to at least partially overcome or alleviate the above problem.

### Summary of the Invention

According to a first aspect of the present invention there is provided a pipe coupling assembly comprising a push-fit pipe coupling and a demount tool, the push-fit pipe coupling comprising a tubular body provided with an exterior thread and adapted to retain internally: a sealing ring; a grab ring; and a demount collar having an engagement portion projecting outside the body of the coupling, the demount tool comprising a part ring provided with: a threaded portion adapted to engage with the exterior thread of the coupling body so as to enable the demount tool to move axially relative to the body of the coupling; and a pressing portion adapted to press on the engagement portion of the demount collar when the demount tool is moved axially to a demount position.

By rotating the demount tool engagement with the exterior thread can move the demount tool axially such that the pressing portion may be brought to bear on the engagement portion of the demount collar. This forces the demount collar axially into the coupling, enabling two way adjustment of the pipe position within the coupling. Since the demount tool can be retained in this position by way of the engagement between the threaded portion and the exterior thread of the coupling, adjustment is much simpler than in prior art arrangements. Additionally, the part ring nature of the demount tool means that it can be readily removed from or reintroduced to the coupling as necessary.

The sealing ring may be provided on an internal shoulder or groove of the coupling body. The sealing ring may comprise an o-ring. The sealing ring dimensions may be selected to enable a seal to be formed between the coupling and an inserted pipe.

The coupling may further comprise a protection ring. The protection ring may sit upon an internal shoulder or groove of the coupling body. The protection ring may be provided between the sealing ring and the grab ring. In this manner, the protection ring may provide protection for the sealing ring from the end of the inserted pipe and/or may help to retain the sealing ring in position.

The grab ring may comprise a plurality of teeth angled radially and axially inward. Such teeth allow the insertion of a pipe but resist the removal of said pipe.

The protection ring and/or grab ring may be provided within a fitting sleeve. The fitting sleeve and protection ring may be provided with corresponding features to limit relative axial movement. The fitting sleeve and protection sleeve may be adapted to retain the grab ring in position between cooperating surfaces. The body of the coupling may be adapted to retain the fitting sleeve in position. In particular, the body may comprise an angled or crimped end section.

The demount collar may comprise an angled contact surface. The angled contact surface may be adapted to press upon the grab ring teeth when forced axially into the coupling. The fitting sleeve and demount collars may be provided with cooperating projections or shoulders operable to limit axial motion of the demount collar out of the coupling.

The demount tool may have a profile substantially corresponding with the exterior of the pipe coupling. The exterior of the demount tool may be provided with features facilitating grip by a user or by a suitable tool. In particular, the features may comprise a plurality of ridges.

The pressing portion of the demount tool may comprise a groove or shoulder. The groove or shoulder may be adapted to abut or engage the engagement portion of the demount collar. The pressing portion of the demount tool may additionally comprise a shoulder adapted to abut a cooperating shoulder of the fitting sleeve. Abutment of the cooperating shoulders of the demount tool and fitting sleeve can limit axial motion of the demount tool and hence limit the insertion of the demount collar into the coupling. This can prevent the demount collar deforming the teeth of the grab ring excessively.

The demount tool may be formed from distinctively coloured material or provided with a coating of distinctively coloured material. In this manner, it can be readily ascertained whether a demount tool remains fastened to a coupling. This is particularly useful in situations where multiple pipes are being coupled and the pipe fitter wishes to be able to adjust each coupling as required. In such cases, once each coupling has been appropriately adjusted, the fitter may remove all the demount tools to lock the couplings in position. A distinctively coloured demount tool will assist the fitter in identifying any assemblies that have not yet been locked in position.

The part ring of the demount tool may subtend an angle in the range of 300-355 degrees, preferably in the range of 330-350 degrees or of, say, substantially 340 degrees. Preferably, the part ring may be adapted such that the gap is slightly narrower than the pipe to be inserted into the coupling. In this manner, the mounting tool requires positive intervention to be removed from the pipe after use.

The threads may be buttress type threads. The perpendicular flat portion of such threads can more securely retain the demount tool in position relative to the body than symmetrical threads.

According to a second aspect of the present invention there is provided a demount tool for a push-fit pipe coupling of the type comprising a tubular body provided with an exterior thread and adapted to retain internally: a sealing ring; a grab ring; and a demount collar having an engagement portion projecting outside the body of the coupling, the demount tool comprising a part ring provided with: a threaded portion adapted to engage with the exterior thread of the coupling body so as to enable the demount tool to move axially relative to the body of the coupling; and a pressing portion adapted to press on the engagement portion of the demount collar when the demount tool is moved axially to a demount position.

According to a third aspect of the present invention there is provided a push-fit pipe coupling adapted to operate with a demount tool comprising a part ring provided with: a threaded portion; and a pressing portion, the coupling comprising a tubular body provided with an exterior thread and adapted to retain internally: a sealing ring; a grab ring; and a demount collar having an engagement portion projecting outside the body of the coupling wherein the exterior thread enables the demount tool to move axially relative to the body of the coupling so that the pressing portion adapted to press on the engagement portion of the demount collar when the demount tool is moved axially to a demount position.

The tool of the second aspect of the present invention and the coupling of the third aspect of the present invention may incorporate any or all features of the assembly of the first aspect of the present invention as desired or as appropriate.

### Detailed Description of the Invention

In order that the invention may be more clearly understood an embodiment thereof will now be described, by way of example only, with reference to the accompanying drawings, of which:

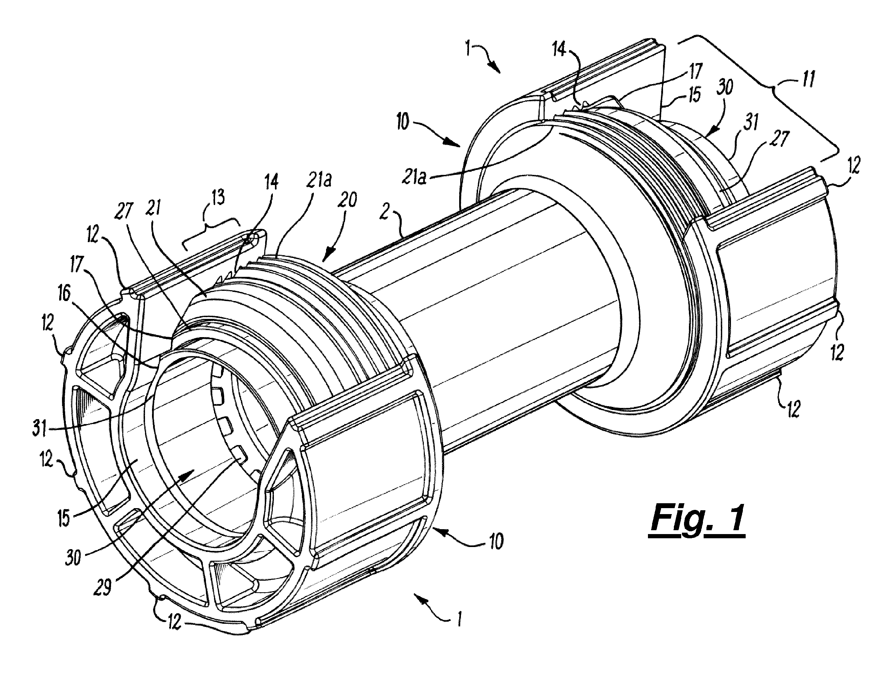

- Figure 1: shows a perspective view of a pipe coupling assembly according to the present invention; and

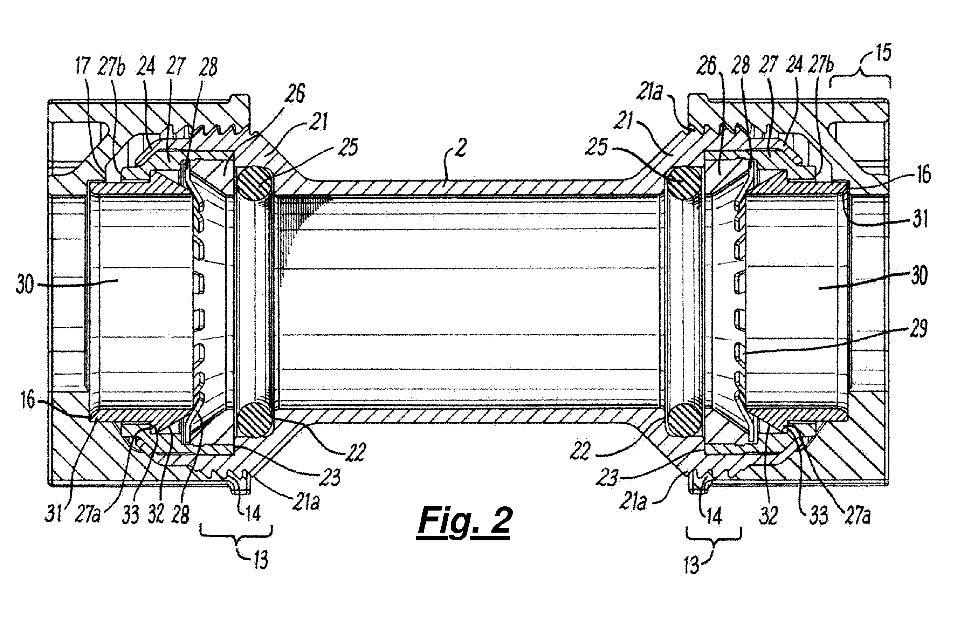

- Figure 2: is a cross-sectional view of the pipe coupling assembly of figure 1.

Turning to the figures, a pair of push-fit pipe coupling assemblies 1 are provided, each assembly 1 at opposing ends of a connecting pipe 2. Each assembly 1 comprises a demount tool 10 and a pipe coupling 20.

Each demount tool is in the form of a part ring having a gap 11. The exterior surface of the demount tool 10 is provided with ridges 12 features facilitating grip by a user or by a suitable tool. The demount tool 10 comprises an threaded portion 13 having an internal thread 14 and a pressing portion 15 comprising an abutting shoulders 16, 17.

Each coupling 20 comprises a body 21 formed as a continuation of connecting pipe 2 and having an exterior thread 21a. Within the body 21 are a pair of internal shoulders 22, 23 and a crimped end portion 24. The shoulders 22, 23 and crimped end 24 act to retain the remaining components of the coupling 20 in position. In this context, a sealing ring 25 sits upon shoulder 22, whilst a protection ring 26 and a fitting sleeve 27 sit upon shoulder 23. The fitting sleeve 27 is further restrained by the crimped end of the body 24.

A grab ring 28 is provided between cooperating surfaces of the protection ring 26 and fitting sleeve 27. The grab ring 28 has a plurality of teeth 29 angled radially and axially inward. As such, the teeth 29 allow a pipe to be inserted into the coupling 20 but resist the removal of said pipe.

The coupling 20 further comprises a demount collar 30. The demount collar has an engagement portion 31 which projects out of the body 21 of the coupling. The demount collar 30 also has an angled contact surface 32.

In use, the thread 14 of demount tool 10 engages with the exterior thread 21a of the body 21. This enables the tool 10 to move axially relative to the coupling 20. As the demount tool 10 moves, the abutting shoulder 16 of the pressing portion 15 comes into contact with the engaging portion 31 of the demount collar 30. This forces the demount collar 30 into the coupling 20. When the demount collar 30 is forced into the coupling 20, the angled contact surface 32 presses on the on the teeth 29 of grab ring 28. As a result, the teeth 29 are directed axially outward. This can prevent the teeth 29 from engaging with a pipe inserted into the coupling 20. Accordingly, the relative position of pipe and coupling 20 can be readily adjusted. Axial insertion of the demount collar 30 is prevented by engagement between the abutting shoulder 17 and a cooperating shoulder 27b of the fitting sleeve. In this manner, the deflection of the teeth 29 by the angled contact surface 32 is limited such that the teeth can still grab a pipe after removal of the demount collar 30.

When adjustment of an inserted pipe is complete, the demount tool 10 can be unscrewed. This releases the force pressing the demount collar 30 into the coupling 20. As a result, the teeth 29 press inward to grab the an inserted pipe. As a further result of the teeth 29 pressing inward, the demount collar 30 is forced axially out of the coupling 20. The extent of this axial movement may be limited by cooperating shoulders 33, 27a on the demount collar 30 and the fitting sleeve 27 respectively.

When the demount tool 10 is completely unscrewed from the exterior thread 21a, it can be readily removed by sliding it along the inserted pipe and slipping it off the inserted pipe using gap 11. Typically, the demount tool 10 may be designed such that the gap 11 is of a similar size to or, most preferably slightly smaller than, the inserted pipe. The tool 10 may be adapted to be slightly flexible so as to facilitate removal of the tool in the event that the gap is slightly smaller than the inserted pipe. Typically this may be achieved by forming the demount tool 10 from a suitable plastic.

The tool 10 is preferably formed from a distinctively coloured material or coated with a distinctively coloured material. This makes it very easy to identify that a demount tool 10 is still attached to a coupling 20 and thus that the coupling 20 is not locked onto an inserted pipe. This might occur where a fitter is responsible for fitting multiple couplings 20 and wishes to continue adjusting the couplings 20 once all are provisionally in place.

Whilst the invention has been described in relation to a double ended coupling assembly, it is equally possible to provide single ended coupling assemblies as well as tee or cross form coupling assemblies. Additionally, it is possible for the end surface 18 of the demount tool 10 to be adapted to suitable for use a demount tool for conventional demount collars.

The above embodiment is described by way of example only. Many variations are possible without departing from the scope of the invention as defined in the appended claims.

## Claims

1. A pipe coupling assembly comprising a push-fit pipe coupling and a demount tool, the push-fit pipe coupling comprising a tubular body provided with an exterior thread and adapted to retain internally: a sealing ring; a grab ring; and a demount collar having an engagement portion projecting outside the body of the coupling, the demount tool comprising a part ring provided with: a threaded portion adapted to engage with the exterior thread of the coupling body so as to enable the demount tool to move axially relative to the body of the coupling; and a pressing portion adapted to press on the engagement portion of the demount collar when the demount tool is moved axially to a demount position.

2. A pipe coupling assembly as claimed in claim 1 wherein the coupling further comprises a protection ring which sits upon an internal shoulder or groove of the coupling body

3. A pipe coupling assembly as claimed in claim 2 wherein the protection ring and grab ring are provided within a fitting sleeve and wherein the fitting sleeve and protection sleeve are adapted to retain the grab ring in position between cooperating surfaces.

4. A pipe coupling assembly as claimed in any preceding claim wherein the demount collar comprises an angled contact surface.

5. A pipe coupling assembly as claimed in claim 3 or claim 4 wherein the fitting sleeve and demount collars are provided with cooperating projections or shoulders operable to limit axial motion of the demount collar out of the coupling.

6. A pipe coupling assembly as claimed in any preceding claim wherein the exterior of the demount tool is provided with a plurality of ridges.

7. A pipe coupling assembly as claimed in any preceding claim wherein the pressing portion of the demount tool comprises a groove or shoulder adapted to abut or engage the engagement portion of the demount collar.

8. A pipe coupling assembly as claimed in any one of claims 3 to 7 wherein the pressing portion of the demount tool comprises a shoulder adapted to abut a cooperating shoulder of the fitting sleeve.

9. A pipe coupling assembly as claimed in any preceding claim wherein the demount tool is formed from distinctively coloured material or provided with a coating of distinctively coloured material.

10. A pipe coupling assembly as claimed in any preceding claim wherein the part ring of the demount tool subtends an angle of 300-355 degrees.

11. A demount tool for a push-fit pipe coupling of the type comprising a tubular body provided with an exterior thread and adapted to retain internally: a sealing ring; a grab ring; and a demount collar having an an engagement portion projecting outside the body of the coupling, the demount tool comprising a part ring provided with: a threaded portion adapted to engage with the exterior thread of the coupling body so as to enable the demount tool to move axially relative to the body of the coupling; and a pressing portion adapted to press on the engagement portion of the demount collar when the demount tool is moved axially to a demount position.

12. A demount tool as claimed in claim 11 wherein the exterior of the demount tool is provided with a plurality of ridges.

13. A demount tool as claimed in claim 11 or claim 12 wherein the pressing portion of the demount tool comprises a groove or shoulder adapted to abut or engage the engagement portion of the demount collar.

14. A demount tool as claimed in any one of claims 11 to 13 wherein the demount tool is formed from distinctively coloured material or provided with a coating of distinctively coloured material.

15. A demount tool as claimed in any one of claims 11 to 14 wherein the part ring of the demount tool subtends an angle in the range of 300-355 degrees.

16. A push-fit pipe coupling adapted to operate with a demount tool comprising a part ring provided with: a threaded portion; and a pressing portion, the coupling comprising a tubular body provided with an exterior thread and adapted to retain internally: a sealing ring; a grab ring; and a demount collar having an engagement portion projecting outside the body of the coupling wherein the exterior thread enables the demount tool to move axially relative to the body of the coupling so that the pressing portion adapted to press on the engagement portion of the demount collar when the demount tool is moved axially to a demount position.

17. A push-fit pipe coupling as claimed in claim 16 wherein the coupling further comprises a protection ring which sits upon an internal shoulder or groove of the coupling body

18. A push-fit pipe coupling as claimed in claim 17 wherein the protection ring and grab ring are provided within a fitting sleeve and wherein the fitting sleeve and protection sleeve are adapted to retain the grab ring in position between cooperating surfaces.

19. A push-fit pipe coupling as claimed in any one of claims 16 to 18 wherein the demount collar comprises an angled contact surface.

20. A pipe coupling assembly as claimed in claim 18 or claim 19 wherein the fitting sleeve and demount collars are provided with cooperating projections or shoulders operable to limit axial motion of the demount collar out of the coupling.
